# EUROPEAN PATENT APPLICATION

(11) **EP 4 765 274 A1**
(43) Date of publication of application: **24.06.2026**
(21) Application number: 25827322.6
(22) Date of filing: 16.06.2025
(51) Int. Cl.: H01M 10/04, H01M 10/42, H01M 50/538, H01M 50/533, H01M 50/213, B60L 53/64

(54) **ELECTRODE ASSEMBLY, BATTERY INCLUDING ELECTRODE ASSEMBLY, AND BATTERY PACK AND VEHICLE INCLUDING BATTERY**

(30) Priority: 24.06.2024 KR 20240082049; 09.06.2025 KR 20250074823
(71) Applicant: LG Energy Solution, Ltd., Seoul 07335 (KR)
(72) Inventor: PARK, Sang-Jin, Daejeon 34122 (KR); PARK, Jong-Hoon, Daejeon 34122 (KR); BACK, Hee-Ji, Daejeon 34122 (KR); SON, Ui-Rim, Daejeon 34122 (KR); WOO, Yeong-Hoon, Daejeon 34122 (KR); LEE, Jun-Su, Daejeon 34122 (KR); CHAE, Sang-Hak, Daejeon 34122 (KR)
(74) Representative: Goddar, Heinz J.
(86) International application number: PCT/KR2025/008233
(87) International publication number: WO 2026/005357

(57) **Abstract**

The present disclosure may provide an electrode assembly in which a positive electrode, a negative electrode, and a separator interposed therebetween are wound, wherein at least one of the positive electrode and the negative electrode includes an uncoated portion at a long side end, and a winding turn portion of the uncoated portion is provided at one end of the electrode assembly, wherein the winding turn portion includes a cutting portion and a bending portion including a plurality of uncoated portion layers configured to be bent by pressure.

## Description

### TECHNICAL FIELD

The present disclosure relates to an electrode assembly, a battery including the electrode assembly, and a battery pack and a vehicle including the same.

This application is based on and claims priority from Korean Patent Application No. 10-2024-0082049, filed on June 24, 2024, with the Korean Intellectual Property Office, the disclosure of which is incorporated herein in its entirety by reference.

This application is based on and claims priority from Korean Patent Application No. 10-2025-0074823, filed on June 9, 2025, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources.

Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

Meanwhile, as a type of unit secondary battery, cylindrical, prismatic, and pouch-type batteries are known. In the case of the battery, a separator that is an insulator is interposed between a positive electrode and a negative electrode, which are then wound to form a jelly roll-type electrode assembly, and this assembly is inserted into the battery housing to form a battery. And, a strip-shaped electrode tab may be connected to the respective uncoated portions of the positive electrode and the negative electrode, and the electrode tab electrically connects the electrode assembly and the electrode terminal exposed to the outside. For reference, the positive electrode terminal is a cap of a sealing body that seals the opening of the battery housing, and the negative electrode terminal is the battery housing.

However, according to a conventional battery having such a structure, since the current is concentrated on the strip-shaped electrode tab connected to the positive electrode uncoated portion and/or the negative electrode uncoated portion, there was a problem in that the resistance is high, a lot of heat is generated, and the current collection efficiency is poor.

In small batteries with a form factor of 1865 or 2170, resistance and heat generation are not major issues. However, when increasing the form factor to apply the battery to electric vehicles, there may be a problem in which the battery is ignited due to the generation of a lot of heat around the electrode tab during the fast charging process.

To solve this problem, a battery (so-called, tab-less battery) having a structure in which the positive electrode uncoated portion and the negative electrode uncoated portion are designed to be respectively positioned at the upper end and lower end of a jelly roll-type electrode assembly, and a current collector plate is welded to these uncoated portions to improve current collection efficiency was proposed.

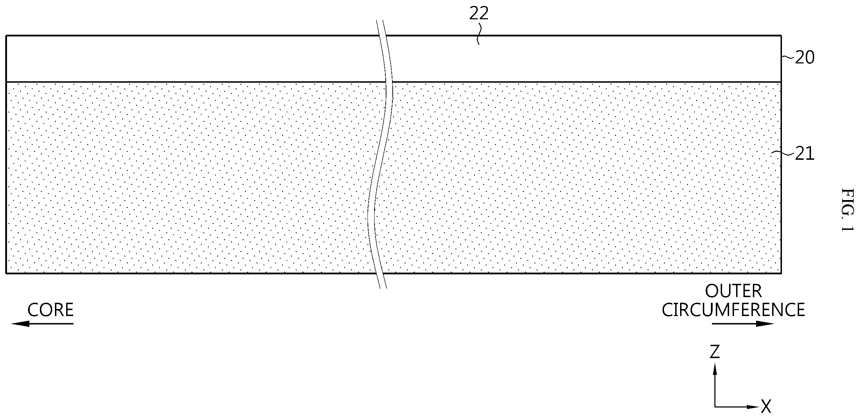

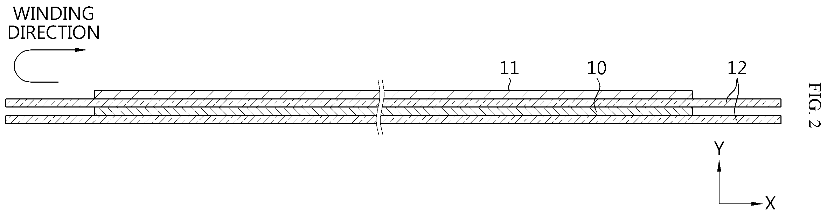

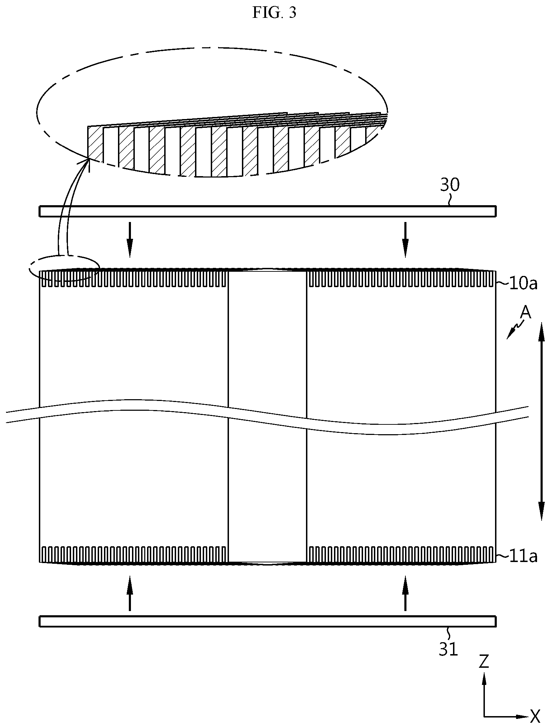

FIGS. 1 to 3 are views showing the manufacturing process of a tab-less battery. FIG. 1 shows the structure of an electrode plate, FIG. 2 shows the winding process of the electrode plate, and FIG. 3 shows the process of welding a current collector plate to the bending surface of an uncoated portion.

Referring to FIGS. 1 to 3, a positive electrode plate 10 and a negative electrode plate 11 may have a structure in which an active material is coated on a sheet-shaped current collector 20, and may include an uncoated portion 22 on one long side along the winding direction X.

The electrode assembly A may be manufactured by sequentially laminating the positive electrode plate 10 and the negative electrode plate 11 with two separators 12 as illustrated in FIG. 2, and then winding them in the winding direction X. At this time, the uncoated portion 10a of the positive electrode plate 10 and the uncoated portion 11a of the negative electrode plate 11 may be disposed in opposite directions based on the short side direction of the separator 12. The positions of the positive electrode plate 10 and the negative electrode plate 11 may be changed in the opposite direction to those illustrated.

After the winding process, the uncoated portion 10a of the positive electrode plate 10 and the uncoated portion 11a of the negative electrode plate 11 may be bent toward the core side. After that, the current collector plates 30, 31 are respectively welded to the uncoated portions 10a, 11a to be coupled.

Separate electrode tabs are not coupled to the positive electrode uncoated portion 10a and the negative electrode uncoated portion 11a, and the current collector plates 30, 31 are connected to external electrode terminals, and the current path is formed with a large cross-sectional area along the winding axis direction (Z-axis direction) of the electrode assembly A, so that there is an advantage of lowering the resistance of the battery. This is because the resistance is inversely proportional to the cross-sectional area of the path through which the current flows.

In a tab-less battery, in order to improve the welding characteristics of the uncoated portions 10a, 11a and the current collector plates 30, 31, strong pressure should be applied to the welding point of the uncoated portions 10a, 11a to bend the uncoated portions 10a, 11a as flat as possible.

However, when a bending surface is formed over the entire upper surface of the electrode assembly A by bending the uncoated portions 10a, 11a, in the event of a thermal event occurring within the battery, the entire electrode assembly A with the bending surface escapes from the battery as a single mass, in which case, it may be difficult to escape due to the beading portion or the like.

### DISCLOSURE

### Technical Problem

The present disclosure is designed to solve the problems of the related art, and therefore the present disclosure is directed to providing an electrode assembly that may easily escape from the battery when a thermal event occurs within the battery.

The present disclosure is also directed to providing a battery including an electrode assembly with an improved structure, a battery pack including the same, and a vehicle including the battery pack.

Technical problems to be solved by the present disclosure are not limited to the above-described problems, and other problems not mentioned herein may be clearly understood by those having ordinary skill in the art from the following description of the present disclosure.

### Technical Solution

In order to solve the above problem, the present disclosure may provide an electrode assembly in which a positive electrode, a negative electrode, and a separator interposed therebetween are wound, wherein at least one of the positive electrode and the negative electrode includes an uncoated portion at a long side end, and a winding turn portion of the uncoated portion is provided at one end of the electrode assembly, wherein the winding turn portion includes a cutting portion and a bending portion including a plurality of uncoated portion layers configured to be bent by pressure.

The bending portion may be positioned on the core side based on a radial direction, and the cutting portion may be positioned further outward than the bending portion based on the radial direction.

The bending portion may be disposed further inward than the innermost part of a beading portion of a battery, and the cutting portion may be disposed further outward than the innermost part of the beading portion.

The plurality of uncoated portion layers may be bent toward the core side of the electrode assembly and overlap each other to form a bending surface region.

The electrode assembly may be divided into a first region surrounded by the bending portion and the bending surface region, and a second region excluding the first region.

The cutting portion may include a cutting surface substantially perpendicular to an axial direction.

The cutting surface may be configured to be cut through a notching process.

The cutting surface may be an ultrasonic cutting surface.

The bending portion may be disposed at a position corresponding to the innermost part of a crimping portion of the battery or further inward.

The bending portion may be disposed at a position corresponding to a venting portion of the battery or further inward.

The present disclosure may provide a battery including an electrode assembly; a battery housing that includes an opened end and a closed portion opposite thereto, accommodates the electrode assembly through the opened end, and is electrically connected to the electrode assembly; a beading portion where an outer circumference of the battery housing is recessed inward; a cap that seals the opened end of the battery housing; a terminal electrically connected to the electrode assembly and having a surface exposed to the outside; and a current collector plate electrically connected to either the battery housing or the terminal.

The bending portion may be disposed further inward than the innermost part of the beading portion, and the cutting portion may be disposed further outward than the innermost part of the beading portion.

The plurality of uncoated portion layers may overlap toward the core side of the electrode assembly to form a bending surface region.

The electrode assembly may be divided into a first region surrounded by the bending portion and the bending surface region, and a second region excluding the first region, and when a thermal event occurs within the battery, the first region may be configured to be discharged to the outside of the battery.

The battery may further include a crimping portion formed below the beading portion and configured to surround a part of the outer circumferential surface of the cap, wherein the bending portion may be disposed at a position corresponding to the innermost part of the crimping portion or further inward, and the cutting portion may be disposed further outward than the innermost part of the crimping portion.

The cap may have a venting portion configured to be ruptured when the internal pressure of the battery housing increases above a certain level, wherein the bending portion may be disposed at a position corresponding to the venting portion or further inward, and the cutting portion may be disposed further outward than the venting portion.

Additionally, the present disclosure provides a battery pack including a battery according to the present disclosure.

And, the present disclosure provides a vehicle including a battery pack according to the present disclosure.

### Advantageous Effects

In the electrode assembly according to an embodiment of the present disclosure, a bending portion configured to be bent by pressure is positioned further inward than the inner end of the beading portion of the battery, and thus when a thermal event occurs inside the battery, the bending portion may be easily discharged to the outside of the battery.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a plan view showing the structure of an electrode used in the manufacture of a conventional tab-less battery.
FIG. 2 is a view showing an electrode winding process of a conventional tab-less battery.
FIG. 3 shows a process of welding a current collector plate to a bending surface of an uncoated portion in a conventional tab-less battery.
FIG. 4 is a plan view showing the structure of an electrode according to an embodiment of the present disclosure.
FIG. 5 is a partial perspective view showing the upper structure of an electrode assembly according to an embodiment of the present disclosure.
FIG. 6 is a cross-sectional view of a jelly roll-type electrode assembly in which the electrode of FIG. 5 according to an embodiment of the present disclosure is applied to the positive electrode and the negative electrode, taken along line A-A'.
FIG. 7 is a view showing the exterior of a battery according to an embodiment of the present disclosure.
FIG. 8 is a cross-sectional view showing the internal structure of a battery according to an embodiment of the present disclosure.
FIG. 9 is a partial cross-sectional view showing the lower structure of a battery according to an embodiment of the present disclosure.
FIG. 10 is a partial cross-sectional view showing the lower structure of a battery according to another embodiment of the present disclosure.
FIG. 11 is a partial cross-sectional view showing the lower structure of a battery according to still another embodiment of the present disclosure.
FIG. 12 is a view schematically showing the configuration of a battery pack according to an embodiment of the present disclosure.
FIG. 13 is a view for describing a vehicle including the battery pack of FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

First, an electrode assembly according to an embodiment of the present disclosure will be described. The electrode assembly is a jelly roll-type electrode assembly having a structure in which a positive electrode and a negative electrode having a sheet shape and a separator interposed therebetween are wound in one direction.

Preferably, at least one of the positive electrode and the negative electrode includes an uncoated portion in which an active material is not coated on the long side end in the winding direction. At least a part of the uncoated portion may be used as an electrode tab in itself.

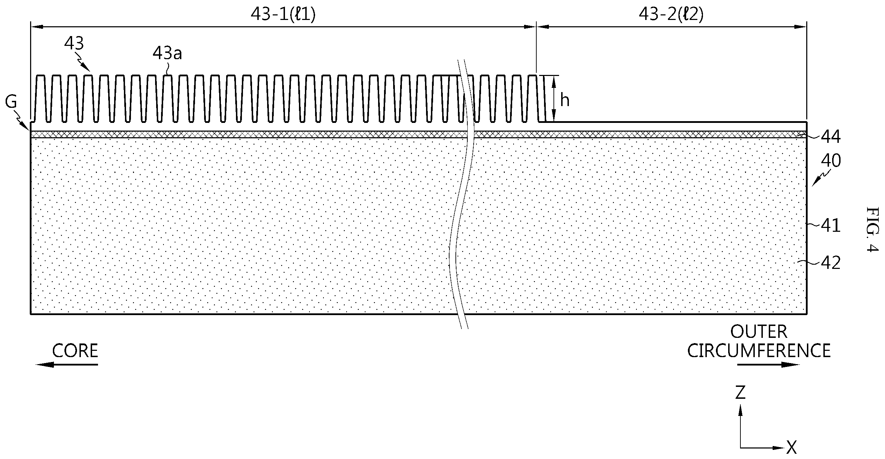

FIG. 4 is a plan view showing the structure of an electrode according to an embodiment of the present disclosure.

Referring to FIG. 4, an electrode 40 according to an embodiment of the present disclosure includes a current collector 41 and an active material layer 42. The configurations of the current collector 41, the active material layer 42, and the uncoated portion 43 of FIG. 4 may be the same as all or part of the configurations of the current collector 20, the active material layer 21, and the uncoated portion 22 of FIGS. 1 to 3. The embodiment of FIG. 4 may be partially combined with the element(s) illustrated in FIGS. 1 to 3.

In the electrode 40 according to an embodiment of the present disclosure, the current collector 41 may include a metal foil. The metal foil may include a conductive metal. The metal foil may be, for example, aluminum or coper, and may be appropriately selected according to the polarity of the electrode 40. The active material layer 42 may be formed on at least one surface of the current collector 41, and the electrode 40 may include the uncoated portion 43 on the long side end in the winding direction X. The uncoated portion 43 is a region where the active material is not coated. An insulating coating layer 44 may be formed at a boundary between the active material layer 42 and the uncoated portion 43. At least a part of the insulating coating layer 44 is formed to overlap the boundary between the active material layer 42 and the uncoated portion 43. The insulating coating layer 44 may include a polymer resin, and may include an inorganic filler such as SiO₂ or Al₂O₃. The polymer resin may have a porous structure. The polymer resin is not particularly limited as long as it is an insulating material. Examples of the polymer resin may include polyolefin, polyimide, polyethylene terephthalate, polybutylene fluoride, and the like, but the present disclosure is not limited thereto.

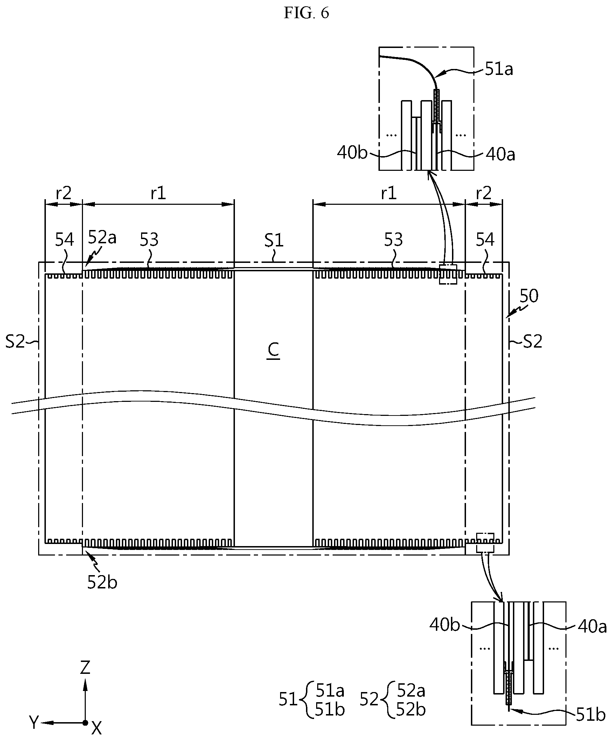

The electrode 40 of the above-described embodiment may be applied to the positive electrode (e.g., the positive electrode 40a of FIG. 6) and/or the negative electrode (e.g., the negative electrode 40b of FIG. 6) included in the jelly roll-type electrode assembly (e.g., the electrode assembly 50 of FIG. 6). Additionally, when the electrode structure of the embodiment is applied to any one of the positive electrode and the negative electrode, a conventional electrode structure (FIG. 1) may be applied to the other. Additionally, the electrode structures applied to the positive electrode and the negative electrode may not be the same but may be different from each other.

In the present disclosure, a positive electrode active material coated on the positive electrode and a negative electrode active material coated on the negative electrode may be used without limitation as long as they are active materials known in the art. In an example, the positive electrode active material may include an alkali metal compound expressed by a general chemical formula A[AₓM_{y}]O_{2+z} (A includes at least one of Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x + y ≤ 2, -0.1 ≤ z ≤ 2; and stoichiometric coefficients x, y, and z are selected so that the compound maintains electrical neutrality).

In another example, the positive electrode active material may be an alkali metal compound xLiM1O₂(₁-x)Li₂M2O₃ (M1 includes at least one element having an average oxide state of 3; M2 includes at least one element having an average oxidation state of 4; 0 ≤ x ≤ 1) disclosed in US6,677,082, US6,680,143, or the like.

In still another example, the positive electrode active material may be lithium metal phosphate expressed by a general chemical formula LiₐM1ₓFe₁₋ₓM2_{y}P_{1-y}M3_{z}O_{4-z} (M1 includes at least one element selected from Ti, Si, Mn, Co, Fe, V, Cr, Mo, Ni, Nd, Al, Mg, and Al; M2 includes at least one element selected from Ti, Si, Mn, Co, Fe, V, Cr, Mo, Ni, Nd, Al, Mg, Al, As, Sb, Si, Ge, V, and S; M3 includes an element of a halogen group selectively containing F; 0 < a ≤ 2, 0 ≤ x ≤ 1, 0 ≤ y < 1, 0 ≤ z < 1; and stoichiometric coefficients a, x, y, and z are selected so that the compound maintains electrical neutrality), or Li₃M₂(PO₄)₃ (M includes at least one element selected from Ti, Si, Mn, Fe, Co, V, Cr, Mo, Ni, Al, Mg, and Al).

Preferably, the positive electrode active material may include primary particles and/or secondary particles in which the primary particles are aggregated.

In an example, the negative electrode active material may use a carbon material, lithium metal or lithium metal compounds, silicon or silicon compounds, tin or tin compounds, or the like. Metal oxide such as TiO₂ or SnO₂ having a potential of less than 2 V may be used as the negative electrode active material. As the carbon material, low crystalline carbon and high crystalline carbon may all be used.

A separator may be a porous polymer film, which is made of, for example, a polyolefin-based polymer such as an ethylene homopolymer, a propylene homopolymer, an ethylene/butene copolymer, an ethylene/hexene copolymer, or an ethylene/methacrylate copolymer, either alone or in layers. In another example, the separator may be a common porous non-woven fabric, for example, a non-woven fabric made of glass fiber having a high melt point or polyethylene terephthalate fiber.

According to an embodiment, the uncoated portion 43 may include a plurality of segments 43a that have been notched. The segments 43a may have a shape of a geometric figure in which at least one straight line and/or at least one curved line are combined. For example, the segments 43a may have a trapezoidal shape, which may be deformed into shapes such as a square, a parallelogram, a semicircle, a semi-ellipse, or the like. Preferably, the height of the plurality of segments 43a may be the same or different from each other. For example, the height may increase or decrease stepwise along one direction parallel to the winding direction of the electrode assembly 50, that is, from the core side to the outer circumference side. Preferably, at least a part of the uncoated portion 43 may be cut. For example, at least a part of the uncoated portion 43 adjacent to the outer circumference side may be cut through a notching process. The height (e.g., the length in the Z-axis direction of FIG. 4) and/or width (e.g., the length in the X-axis direction of FIG. 4) of the segments 43a may be designed and changed in various ways, and the number of the plurality of segments 43a may be increased or decreased compared to the illustrated number.

According to an embodiment, the uncoated portion 43 may include a core-side uncoated portion 43-1 including a plurality of segments 43a and an outer circumference-side uncoated portion 43-2 that is cut to include a cutting surface. For example, the length of one surface of the core-side uncoated portion 43-1 parallel to the winding direction may be a first length (11), and the length of one surface of the outer circumference-side uncoated portion 43-2 parallel to the winding direction may be a second length (l2). The uncoated portion 43 may form a plurality of winding turns in the radial direction when the electrode 40 is wound. For example, the first length (11) may be formed longer than the second length (l2). For example, the first length (11) may be formed shorter than the second length (l2). The length ratio of the core-side uncoated portion 43-1 and the outer circumference-side uncoated portion 43-2 may be designed and changed in various ways, and may be adjusted according to the radial width of the core-side uncoated portion 43-1 and the outer circumference-side uncoated portion 43-2 that form the plurality of winding turns.

When the uncoated portion 43 is cut, a gap G may be preferably provided between the cutting line and the insulating coating layer 44 to prevent damage to the active material layer 42 and/or the insulating coating layer 44. For example, the gap G may be about 0.2 mm to 4 mm. When the gap G is adjusted within the corresponding numerical range, it is possible to prevent the active material layer 42 and/or the insulating coating layer 44 from being damaged by cutting tolerances when the uncoated portion 43 is cut.

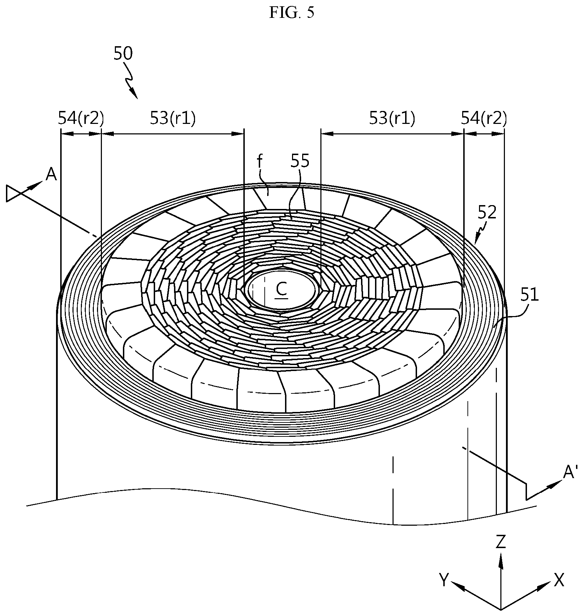

FIG. 5 is a partial perspective view showing the upper structure of an electrode assembly according to an embodiment of the present disclosure. FIG. 6 is a cross-sectional view of a jelly roll-type electrode assembly in which the electrode of FIG. 5 according to an embodiment of the present disclosure is applied to the positive electrode and the negative electrode, taken along line A-A'.

Referring to FIGS. 5 and 6, an electrode assembly 50 according to an embodiment of the present disclosure may include an uncoated portion 51 that at least one of the positive electrode and the negative electrode includes. The configuration of the uncoated portion 51 of FIGS. 5 and 6 may be the same as all or part of the configuration of the uncoated portion 43 of FIG. 4. The embodiment of FIGS. 5 and 6 may be partially combined with the embodiment of FIG. 4.

The electrode assembly 50 may be defined as an assembly in which a positive electrode 40a, a negative electrode 40b, and a separator (e.g., the separator 12 of FIG. 2) interposed therebetween are wound. The electrode assembly 50 may be manufactured by the winding method described with reference to FIG. 2.

For example, the positive electrode 40a may include a current collector (e.g. a current collector 41 of FIG. 4) and an active material coating layer (e.g., an active material layer 42 of FIG. 4) formed on at least one surface thereof, and the thickness of the current collector may be about 180 um to 220 um. The negative electrode 40b may include a current collector (e.g. a current collector 41 of FIG. 4) and an active material coating layer (e.g., an active material layer 42 of FIG. 4) formed on at least one surface thereof, and the thickness of the current collector may be 140 um to 180 um. The separator (not shown) is interposed between the positive electrode 40a and the negative electrode 40b, and may have a thickness ranging from about 8 um to 18 um. For example, the length of the active material layer of the positive electrode 40a in the Z-axis direction may be shorter than the length of the active material layer of the negative electrode 40b in the Z-axis direction. Therefore, the active material layer of the negative electrode 40b may extend longer than the active material layer of the positive electrode 40a along the Z-axis direction. For example, in the electrode assembly 50, the number of winding turns of the positive electrode 40a varies depending on the form factor of the battery 100 and may be about 48 to 56. The number of winding turns of the negative electrode 40b also varies depending on the form factor of the battery 100 and may be about 48 to 56.

The separator (not shown) may be interposed between the positive electrode 40a and the negative electrode 40b. At least one surface of the separator (not shown) may include a coating layer of inorganic particles. Additionally, the separator (not shown) itself may be formed of a coating layer of inorganic particles. The particles constituting the coating layer may have a structure in which they are coupled to a binder so that an interstitial volume exists between adjacent particles. For example, the inorganic particles may be formed of an inorganic material having a dielectric constant of 5 or more. As a non-limiting example, the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

At least one of the positive electrode 40a and the negative electrode 40b of the electrode assembly 50 may include an uncoated portion 51 at a long side end. The uncoated portion 51 may include a positive electrode uncoated portion 51a extending from the positive electrode 40a, and a negative electrode uncoated portion 51b extending from the negative electrode 40b. For example, the positive uncoated portion 51a may protrude in an upward direction of the electrode assembly 50 (e.g., the +Z-axis direction of FIG. 5), and the negative uncoated portion 51b may protrude in a downward direction of the electrode assembly 50 (e.g., the -Z-axis direction of FIG. 5).

For example, in the winding structure of the positive electrode 40a, the spacing between the positive electrode uncoated portions 51a positioned at radially adjacent winding turns may be about 350 um to 380 um. Additionally, in the winding structure of the negative electrode 40b, the spacing between the negative electrode uncoated portions 51b positioned at radially adjacent winding turns may be 350 um to 380 um.

The uncoated portion 51 may be formed longer than the uncoated portion applied to the design of a small battery 100. Preferably, the uncoated portion 51 may be 6 mm or longer, optionally 7 mm or longer, optionally 8 mm or longer, optionally 9 mm or longer, optionally 10 mm or longer, optionally 11 mm or longer, and optionally 12 mm or longer.

Preferably, the insulating coating layer 44 formed at the boundary between the active material layer (e.g., the active material layer 42 of FIG. 4) of the positive electrode 40a and the negative electrode 40b and the uncoated portion 51 may extend to the end of the separator (not shown) or be exposed to the outside from the end. When the insulating coating layer 44 is exposed to the outside of the separator (not shown), it may serve to support the bending point when the uncoated portion 51 is bent. When the bending point is supported, the stress applied to the active material layer 42 and the separator (not shown) when the uncoated portion 51 is bent may be relieved. Additionally, the insulating coating layer 44 may prevent the positive electrode 40a and the negative electrode 40b from contacting each other and causing a short circuit.

A winding turn portion 52 of the uncoated portion 51 may be provided at one end of the electrode assembly 50. The winding turn portion 52 may refer to a portion formed when the uncoated portion 51 is wound. The winding turn portion 52 is exposed to the outside of the separator (not shown) along the winding axis direction Z. A positive electrode winding turn portion 52a formed when the positive electrode uncoated portion 51a is wound may be provided at the upper part of the electrode assembly 50. Similarly, a negative electrode winding turn portion 52b formed when the negative electrode uncoated portion 51b is wound may be provided at the lower part of the electrode assembly 50.

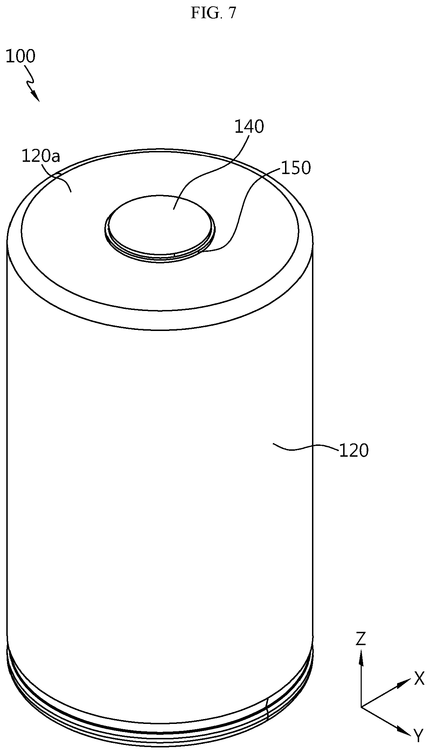

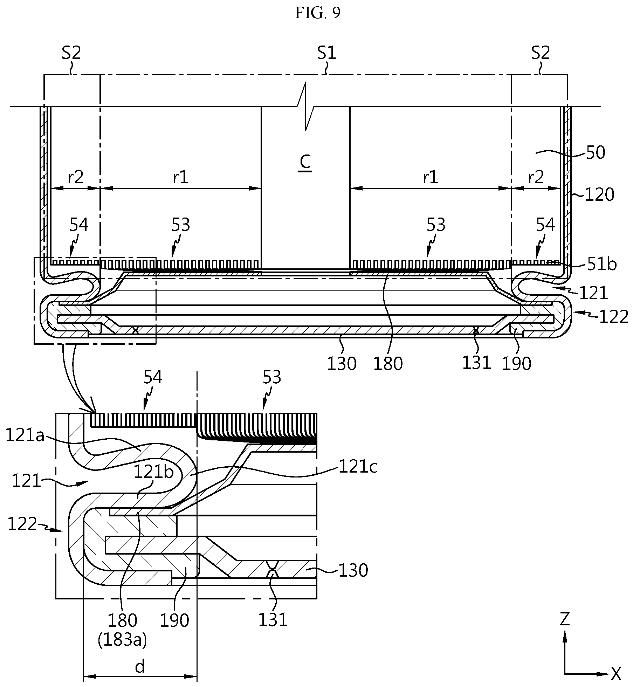

According to an embodiment, the winding turn portion 52 may be divided into one or more parts. According to an embodiment, the winding turn portion 52 may be divided into a first part and a second part disposed outside the first part. The first part and the second part may be divided based on the radial direction of the electrode assembly 50. In other words, the first part may be positioned on the core side and the second part may be positioned on the outer circumference side based on the radial direction of the electrode assembly 50. According to an embodiment, the first part and the second part may be divided based on the beading portion (e.g., the beading portion 121 of FIG. 9) of the battery (e.g., the battery 100 of FIG. 7). For example, the first part may be disposed at a position corresponding to the inner end (e.g., the inner end 121c of FIG. 9) of the beading portion 121 of the battery 100 or further inward. Accordingly, the boundary region between the first part and the second part may be positioned at a position corresponding to the innermost part of the beading portion 121 along the radial direction or further inward.

According to an embodiment, the winding turn portion 52 may include a bending portion 53 and/or a cutting portion 54.

The bending portion 53 may include a plurality of uncoated portion layers 55 arranged along the radial direction. The plurality of uncoated portion layers 55 may be defined as ends of wound uncoated portions protruding in a direction parallel to the winding axis (a direction parallel to the Z-axis). The plurality of uncoated portion layers 55 may be configured to be bent by pressure. The bent uncoated portion layers 55 may overlap each other. The plurality of uncoated portion layers 55 may be bent toward the core C side. The plurality of uncoated portion layers 55 may be irregularly bent.

The plurality of uncoated portion layers 55 may be bent toward the core side to overlap each other, thereby forming a flat bending surface region (f) that is substantially perpendicular to the winding axis direction Z. The bending surface region (f) may be one substantially flat surface facing an upper direction formed by the plurality of uncoated portion layers 55. The bending surface region (f) may be used as a welding area of a current collector plate (e.g., the first current collector plate 180 of FIG. 9). The bending surface region (f) may include a region where the plurality of uncoated portion layers 55 overlap in multiple layers to achieve sufficient welding strength. When the plurality of uncoated portion layers 55 are bent toward the core side to form the bending surface region (f), the electrode assembly 50 whose upper part is surrounded by the bending surface region (f) may function as a single mass. In other words, when a thermal event occurs within the battery 100, the part surrounded by the bending surface region (f) may be discharged to the outside of the battery 100 in the form of a single mass.

The cutting portion 54 may include a cutting surface substantially perpendicular to the winding axis direction Z. For example, the cutting surface may be configured to be cut through a notching process. For example, the cutting surface may be an ultrasonic cutting surface. Meanwhile, as illustrated in the drawings of the present disclosure, the cutting portion 54 may be a region where the length of the uncoated portion 51 is formed to be shorter than that of the surrounding region by removing a part or all of the uncoated portion 51. However, the present disclosure is not limited thereto, and the length of the uncoated portion 51 at the cutting portion 54 may be formed to be substantially the same as the length of the uncoated portion 51 around the cutting portion 54 (the length before bending).

According to an embodiment, the winding turn portion 52 may be divided into a bending portion 53 and a cutting portion 54. In other words, the winding turn portion 52 may include a bending portion 53 and a cutting portion 54. The radial width of the bending portion 53 may be a first width r1, and the radial width of the cutting portion 54 may be a second width r2. The arrangement and ratio of the cutting portion 54 and the bending portion 53 may be designed and changed in various ways depending on the embodiment.

According to an embodiment, the first part of the winding turn portion 52 may refer to the bending portion 53, and the second part may refer to the cutting portion 54. That is, the bending portion 53 may be positioned on the core side based on the radial direction, and the cutting portion 54 may be positioned further outward than the bending portion 53 based on the radial direction. For example, the bending portion 53 may be positioned at a position corresponding to the inner end 121c (see FIG. 9), which is the innermost part of the beading portion 121 of the battery 100, or further inward, and the cutting portion 54 may be positioned further outward than the bending portion 53. In this case, when a thermal event occurs within the battery 100, the path of the bending portion 53 may not be restricted or obstructed when it is discharged to the outside of the battery 100. That is, the bending portion 53 may be easily discharged without colliding with the beading portion 121 when it is discharged to the outside of the battery 100.

According to an embodiment, the electrode assembly 50 may be divided into a first region S1 whose upper part is surrounded by the bending portion 53 and the bending surface region (f), and a second region S2 excluding the first region S1. The first region S1 of the electrode assembly 50 may correspond to the bending portion 53, and the second region S2 of the electrode assembly 50 may correspond to the cutting portion 54. That is, the bending portion 53 may be positioned at the upper part of the first region S1 of the electrode assembly 50, and the cutting portion 54 may be positioned at the upper part of the second region S2. The first region S1 may be surrounded by the second region S2. For example, the first region S1 may be in a cylindrical shape having a narrower width than the electrode assembly 50. For example, the second region S2 may have a hollow shape with an open interior. The first region S1 may be disposed further inward than the inner end 121c, which is the innermost part of the beading portion 121 of the battery 100.

As such, the electrode assembly 50 according to an embodiment of the present disclosure may have a structure in which a region positioned on the inner side radially is not bound to a region positioned on the outer side. Specifically, in the first region S1 of the electrode assembly 50 of the present disclosure, an overlapping structure is formed due to the bending between the uncoated portion layers 55, thereby binding the uncoated portion layers 55 to each other. However, a binding structure due to such overlapping is not formed between the uncoated portion layers 55 provided in the first region S1 and the uncoated portion layers 55 provided in the second region S2. Therefore, the first region S1 and the second region S2 of the electrode assembly 50 may be separated from each other by a force acting along the vertical direction (a direction parallel to the Z-axis).

In this case, when a thermal event occurs within the battery 100, the path of the first region S1 may not be restricted or obstructed when the first region S1 is discharged to the outside of the battery 100. That is, the first region S1 may be easily discharged without colliding with the beading portion 121 when discharged to the outside of the battery 100.

The electrode assembly 50 according to an embodiment of the present disclosure may be applied to a jelly roll-type battery 100.

Preferably, the battery 100 may be, for example, a battery 100 whose form factor ratio (defined as a value obtained by dividing a diameter of the battery 100 by a height, that is, a ratio of the diameter Φ to the height H) is greater than about 0.4.

Here, the form factor means a value indicating the diameter and height of the battery 100. The battery 100 according to an embodiment of the present disclosure may be, for example, a 46110 battery 100, a 4875 battery 100, a 48110 battery 100, a 4880 battery 100, or a 4680 battery 100. In the numerical value indicating the form factor, the first two digits indicate the diameter of the battery 100, and the remaining digits indicate the height of the battery 100.

When applying an electrode assembly having a tab-less structure to a battery whose form factor ratio exceeds 0.4, the stress applied in a radial direction when an uncoated portion is bent is large, and thus the uncoated portion is easily torn. Additionally, in order to secure sufficient welding strength and reduce resistance when welding the current collector plate 80 to a bending surface 56 region of the uncoated portion 51, the number of overlapping layers of the uncoated portions should be sufficiently increased. Such a requirement may be achieved by the electrode and electrode assembly 50 according to embodiments (modified examples) of the present disclosure.

A battery 100 according to an embodiment of the present disclosure may be a battery 100 in a roughly cylindrical shape, having a diameter of about 46 mm, a height of about 110 mm, and a form factor ratio of 0.418.

A battery 100 according to another embodiment may be a battery 100 in a roughly cylindrical shape, having a diameter of about 48 mm, a height of about 75 mm, and a form factor ratio of 0.640.

A battery 100 according to still another embodiment may be a battery 100 in a roughly cylindrical shape, having a diameter of about 48 mm, a height of about 110 mm, and a form factor ratio of 0.436.

A battery 100 according to still another embodiment may be a battery 100 in a roughly cylindrical shape, having a diameter of about 48 mm, a height of about 80 mm, and a form factor ratio of 0.600.

A battery 100 according to still another embodiment may be a battery 100 in a roughly cylindrical shape, having a diameter of about 46 mm, a height of about 80 mm, and a form factor ratio of 0.575.

Conventionally, batteries 100 having a form factor ratio of about 0.4 or less have been used. That is, conventionally, for example, a 1865 battery 100, a 2170 battery 100, or the like have been used. The 1865 battery 100 has a diameter of about 18 mm, a height of about 65 mm, and a form factor ratio of 0.277. The 2170 battery 100 has a diameter of about 21 mm, a height of about 70 mm, and a form factor ratio of 0.300.

Hereinafter, a battery 100 according to an embodiment of the present disclosure will be described in detail.

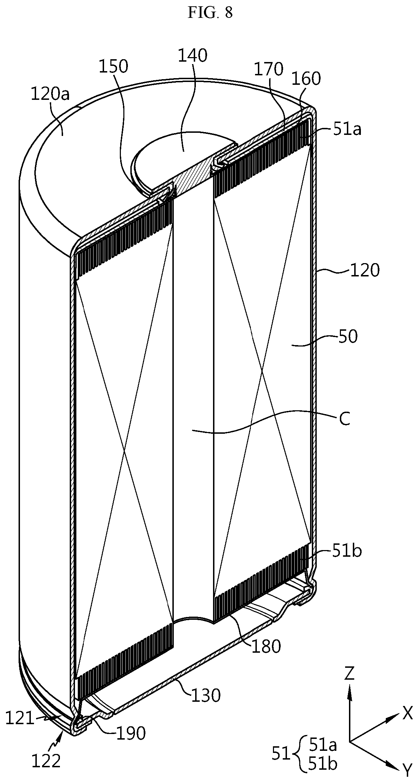

FIG. 7 is a view showing the exterior of a battery according to an embodiment of the present disclosure. FIG. 8 is a cross-sectional view showing the internal structure of a battery according to an embodiment of the present disclosure. FIG. 9 is a partial cross-sectional view showing the lower structure of a battery 100 according to an embodiment of the present disclosure.

Referring to FIGS. 7 to 9, a battery 100 according to an embodiment of the present disclosure may include an electrode assembly 50 that includes a positive electrode, a separator, and a negative electrode wound in the form of a jelly roll; a battery housing 120 that accommodates the electrode assembly 50; a cap having a plate shape 130; and a terminal 140. The configuration of the electrode assembly 50 of FIGS. 7 to 9 may be the same as all or part of the configuration of the electrode assembly 50 of FIGS. 1 to 6. The embodiment of FIGS. 7 to 9 may be partially combined with the embodiment of FIGS. 1 to 6.

The battery 100 according to an embodiment of the present disclosure may be, for example, a cylindrical battery. The battery 100 may include an electrode assembly 50, a housing 120, a cap having a plate shape 130, and a terminal 140. The battery 100 may further include an insulating gasket 150 and/or current collector plates 160, 180 and/or an insulator 170 and/or a sealing gasket 190 in addition to the components described above. The present disclosure is not limited by the shape of the battery and is applicable to batteries of other shapes, such as a prismatic battery.

The battery housing 120 is a roughly cylindrical container with an opening formed at the bottom and may include a conductive material, such as metal. For example, as the material of the battery housing 120, steel, stainless steel, nickel-plated iron, or the like may be applied. The bottom portion of the battery housing 120 provided with the opening is referred to as the opened end. The upper surface positioned opposite to the opening (or opened end) is referred to as the closed portion or closed end. The side surface (outer circumferential surface) and the closed portion of the battery housing 120 may be integrally formed. Alternatively, the side walls and the closed portion of the battery housing 120 may be provided separately and coupled to each other by welding or the like. The upper surface (the surface parallel to the X-Y plane) of the battery housing 120, that is, the outer surface 120a of the closed portion, may have a roughly flat shape. The battery housing 120 accommodates the electrode assembly 50 through the opening formed at the bottom, and may accommodate an electrolyte together.

The battery housing 120 may be electrically connected to the electrode assembly 50. For example, the housing 120 may be electrically connected to the negative electrode uncoated portion 51b of the electrode assembly 50. In this case, the battery housing 120 may have the same polarity as the negative electrode uncoated portion 51b.

The battery housing 120 may have a beading portion 121 and a crimping portion 122 formed at the lower end thereof. The beading portion 121 may be positioned at the lower part of the electrode assembly 50. The beading portion 121 may be formed by pressing the outer circumference of the battery housing 120. In other words, the beading portion 121 may have a shape in which the outer circumference of the battery housing 120 is recessed inward. More specifically, the beading portion 121 may have a shape in which it is pressed inward in the region between the opening formed at one side of the battery housing 120 and the receiving portion that accommodates the electrode assembly 50. The upper beading portion 121a and the lower beading portion 121b that are respectively positioned above and below the innermost part 121c of the beading portion 121, which is positioned at the innermost side along the pressing direction, may have an asymmetrical shape. This asymmetrical shape may be formed during a process in which the battery housing 120 is compressed along the height direction (a direction parallel to the Z-axis) through a sizing process. The sizing process is a process in which the battery housing 120 is pressed along the winding axis direction of the electrode assembly 50 to adjust the height of the battery 100 to the design form factor.

The lower beading portion 121b may have a flat portion that is roughly parallel to the closed portion of the battery housing 120. On the other hand, due to the asymmetrical formation, the upper beading portion 121a may have a shape that is at least partially inclined upward along the direction toward the inner end 121c. Accordingly, the upper beading portion 121a may press and fix the lower part of the electrode assembly 50. The beading portion 121 prevents the electrode assembly 50 having a size roughly corresponding to the inner diameter of the battery housing 120 from coming out through the opening formed at the lower end of the battery housing 120, and may function as a support portion on which the cap 130 is seated. The lower beading portion 121b may function as a support portion for fixing not only the cap 130 to be described later, but also the contact portion 183a of the current collector plate 180, the sealing gasket 190, and the like.

The crimping portion 122 may be formed below the beading portion 121. The crimping portion 122 may extend from the lower beading portion 121b. The crimping portion 122 may have an extending and bent shape to surround the outer circumferential surface of the cap 130 disposed below the beading portion 121 and a part of the lower surface of the cap 130. The crimping portion 122 may fix the sealing gasket 190 in addition to the cap 130.

However, the present disclosure does not exclude the case where the battery housing 120 does not have the beading portion 121 and/or the crimping portion 122. In the present disclosure, when the battery housing 120 does not have a beading portion 121 and/or a crimping portion 122, the fixing of the electrode assembly 50 and/or the fixing of the cap 130 and/or the sealing of the battery housing 120 may be realized, for example, by further applying a part capable of functioning as a stopper for the electrode assembly 50 and/or further applying a structure on which the cap 130 may be seated and/or welding between the battery housing 120 and the cap 130.

Meanwhile, the battery housing 120 may be configured to have different thicknesses for each position. The battery housing 120 may be formed so that the thickness of the side wall portion is thinner than the thickness of the closed portion. In this configuration, the diameter of the electrode assembly 50 may be formed larger, which may be advantageous in terms of energy density.

The closed portion, that is, the region forming the upper surface, of the battery housing 120 may have a thickness, for example, in the range of about 0.4 mm to 1.2 mm, and more preferably, a thickness in the range of about 0.6 mm to 1.0 mm. If the thickness of the closed portion of the battery housing 120 is too thin, there may be an increasing risk of deformation of the battery housing 120 during internal pressure increase or welding. Conversely, if the thickness of the closed portion of the battery housing 120 is too thick, there may be a disadvantage in terms of processing the battery housing 120 and an increasing risk of loss in terms of energy density. Therefore, it is necessary to manage the thickness of the closed portion of the battery housing 120 at an appropriate level.

Meanwhile, the side wall portion forming the outer circumferential surface of the battery housing 120 may have a thickness, for example, in the range of about 0.3 mm to 0.8 mm, and more preferably, a thickness in the range of about 0.4 mm to 0.6 mm. If the thickness of the side wall portion of the battery housing 120 is too thin, there is a high possibility that the fire will spread to neighboring batteries 100 in the event of ignition and explosion of the battery 100. For example, in a battery pack 300 including a plurality of batteries 100, when an abnormality occurs in some of the batteries 100 to cause ignition and explosion, pin holes may be formed if the thickness of the side wall portion of the battery housing 120 is too thin, thereby increasing the risk of chain reactions of ignition and explosion. On the other hand, if the thickness of the side wall portion of the battery housing 120 is too thick, there may be a disadvantage in terms of processing the battery housing 120 and an increasing risk of loss in terms of energy density. Therefore, it is necessary to manage the thickness of the side wall portion of the battery housing 120 at an appropriate level. Meanwhile, a plating layer may be formed on the battery housing 120. In this case, the plating layer may include, for example, nickel (Ni). The thickness of the plating layer may be in the range of about 1.5 µm to 6.0 µm.

The cap 130 may be made of, for example, a metal material to secure rigidity. The cap 130 may seal an opening (or opened end) formed at the lower end of the battery housing 120. That is, the cap 130 may form the lower surface of the battery 100. In the battery 100 of the present disclosure, the cap 130 may not have polarity even if it is made of a conductive metal material. Not having polarity may mean that the cap 130 is not electrically connected to the electrode assembly 50. When the cap 130 is not electrically connected to the electrode assembly 50 in this way, the cap 130 may not function as a positive electrode terminal or a negative electrode terminal. That is, in the present disclosure, the cap 130 does not need to be electrically connected to the electrode assembly 50 and the battery housing 120, and its material does not necessarily have to be a conductive metal.

When the battery housing 120 of the present disclosure has a beading portion 121, the cap 130 may be supported by the lower surface of the beading portion 121 formed in the battery housing 120. Additionally, when the battery housing 120 of the present disclosure has a crimping portion 122, the cap 130 may be fixed by the crimping portion 122. That is, the upper surface of the cap 130 may be supported by the beading portion 121, and the outer circumferential surface and the lower surface may be supported by the crimping portion 122. A sealing gasket 190 may be interposed between the cap 130 and the crimping portion 122 of the battery housing 120 to secure airtightness of the battery housing 120. Meanwhile, as described above, the battery housing 120 of the present disclosure may not have the beading portion 121 and/or the crimping portion 122, in which case the sealing gasket 190 may be interposed between the cap 130 and a structure for fixing provided on the opening side of the battery housing 120 to secure airtightness of the battery housing 120.

The cap 130 may further have a venting portion 131 formed to prevent the internal pressure from increasing beyond a preset value due to gas generated inside the battery housing 120. The preset internal pressure value may be about 15 to 35 kgf/cm². That is, the rupture pressure of the venting portion 131 may be about 15 to 35 kgf/cm². The venting portion 131 corresponds to a region having a thinner thickness compared to the surrounding region of the cap 130. The venting portion 131 is structurally weaker compared to the surrounding region. Therefore, when an abnormality occurs in the battery 100 and the internal pressure of the battery housing 120 increases beyond a certain level, the venting portion 131 is ruptured and the gas generated inside the battery housing 120 is discharged. The venting portion 131 may be formed, for example, by notching one surface or both surfaces of the cap 130 to partially reduce the thickness of the battery housing 120.

The electrode assembly 50 according to an embodiment of the present disclosure includes a first region S1 surrounded by a bending portion 53 and a bending surface region (f), and a second region S2 excluding the first region S1. The first region S1 and the second region S2 may be distinguished based on the beading portion 121. That is, the first region S1 may be formed further inward than the inner end 121c, which is the innermost part of the beading portion 121. The bending portion 53 may be disposed at a position corresponding to the inner end 121c, which is the innermost part of the beading portion 121 of the battery 100, or further inward. Referring to FIG. 9, the length of the second width (r2), which is the radial width of the cutting portion 54 of the second region S2, may be equal to or longer than the length (d) where the inner end 121c, which is the innermost part of the beading portion 121, is recessed. At this time, the first region S1 may function as a single mass bound by the bending and overlapping of the uncoated portion layers. Additionally, the movement of the first region S1 in the vertical direction (a direction parallel to the Z-axis) may not be restricted by the second region S2. Therefore, when a thermal event occurs within the battery 100, the first region S1 positioned at a position where the movement thereof is not restricted by the beading portion 121 may be easily discharged to the outside of the battery 100 when the battery 100 is ruptured due to an increase in the internal pressure of the battery 100. For example, when the venting portion 131 provided in the cap 130 is ruptured due to an increase in the internal pressure of the battery housing 120, the movement of the first region S1 of the electrode assembly 50 is not restricted by the beading portion 121 and the second region S2, and the first region S1 may be easily discharged to the outside of the battery housing 120. When a significant part of the electrode assembly 50 is easily discharged to the outside in the event of a thermal event in this way, it is possible to achieve the effect of quickly removing the internal heat source of the battery housing 120, thereby quickly terminating the thermal event.

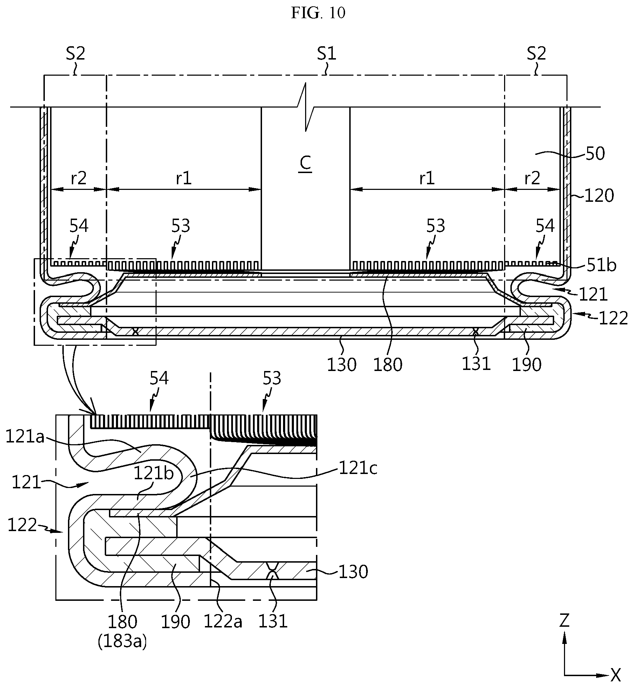

FIG. 10 is a partial cross-sectional view showing the lower structure of a battery according to another embodiment of the present disclosure.

An electrode assembly 50 according to another embodiment of the present disclosure includes a first region S1 surrounded by a bending portion 53 and a bending surface region (f), and a second region S2 excluding the first region S1. The first region S1 and the second region S2 may be distinguished based on the crimping portion 122. That is, the first region S1 may be formed further inward than the innermost part 122a of the crimping portion 122. The bending portion 53 may be disposed at a position corresponding to the innermost part 122a of the crimping portion 122 of the battery 100, or further inward. The innermost part 122a of the crimping portion 122 may refer to the radially innermost part.

The crimping portion 122 may be formed below the beading portion 121. The crimping portion 122 may have an extending and bent shape to surround the outer circumferential surface of the cap 130 disposed below the beading portion 121 and a part of the lower surface of the cap 130. The crimping portion 122 may fix the sealing gasket 190 in addition to the cap 130. The innermost part 122a of the crimping portion 122 may refer to a bent end extending to surround the lower surface of the cap 30.

For example, the crimping portion 122 may be positioned further radially inward than the beading portion 121.

Therefore, when a thermal event occurs within the battery 100, the first region S1 may be easily discharged to the outside of the battery 100. Specifically, when a thermal event occurs within the battery 100, the cap 130 may be separated from the crimping portion 122. At this time, since the bending portion 53 and the first region S1 are positioned further radially inward than the crimping portion 122, the movement of the first region S1 is not restricted due to the restriction of the external discharge by the crimping portion 122, and the first region S1 may be easily discharged to the outside of the battery housing 120. When a significant part of the electrode assembly 50 is easily discharged to the outside in the event of a thermal event in this way, it is possible to achieve the effect of quickly removing the internal heat source of the battery housing 120.

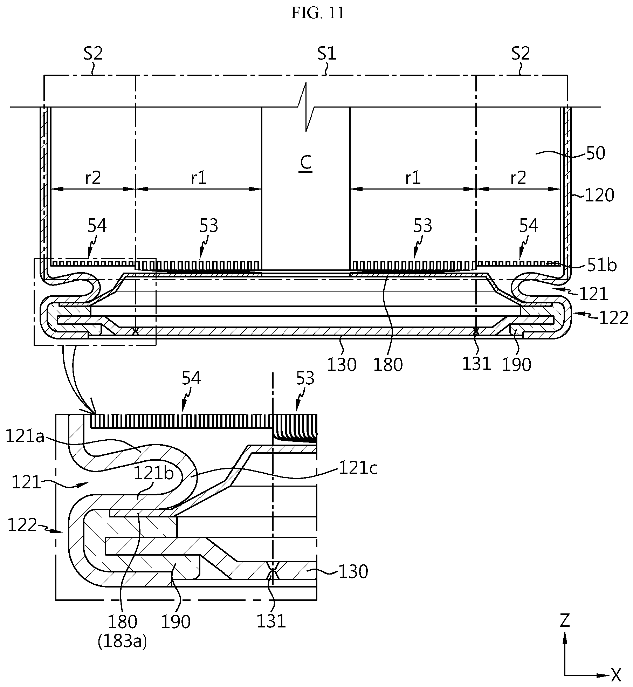

FIG. 11 is a partial cross-sectional view showing the lower structure of a battery according to still another embodiment of the present disclosure.

An electrode assembly 50 according to another embodiment of the present disclosure includes a first region S1 surrounded by a bending portion 53 and a bending surface region (f), and a second region S2 excluding the first region S1. The first region S1 and the second region S2 may be distinguished based on the venting portion 131. That is, the first region S1 may be formed further radially inward than the venting portion 131. The bending portion 53 may be disposed at a position corresponding to the venting portion 131 of the battery 100, or further radially inward.

The cap 130 may further have a venting portion 131 formed to prevent the internal pressure from increasing beyond a preset value due to gas generated inside the battery housing 120. When an abnormality occurs in the battery 100 and the internal pressure of the battery housing 120 increases beyond a certain level, the venting portion 131 is ruptured and the gas generated inside the battery housing 120 is discharged. The venting portion 131 may be formed, for example, by notching one surface or both surfaces of the cap 130 to partially reduce the thickness of the battery housing 120.

When a thermal event occurs within the battery 100, the venting portion 131 may be ruptured regardless of whether the cap 130 is separated from the crimping portion 122. Therefore, when a thermal event occurs within the battery 100, the first region S1 may be easily discharged to the outside of the battery 100. When a thermal event occurs within the battery 100, the first region S1 may be easily discharged to the outside of the battery 100 through the ruptured venting portion 131. Specifically, at this time, since the bending portion 53 and the first region S1 are positioned further radially inward than the venting portion 131, the external discharge is not blocked by the venting portion 131 and the first region S1 may be easily discharged to the outside of the battery housing 120. When a significant part of the electrode assembly 50 is easily discharged to the outside in the event of a thermal event in this way, it is possible to achieve the effect of quickly removing the internal heat source of the battery housing 120.

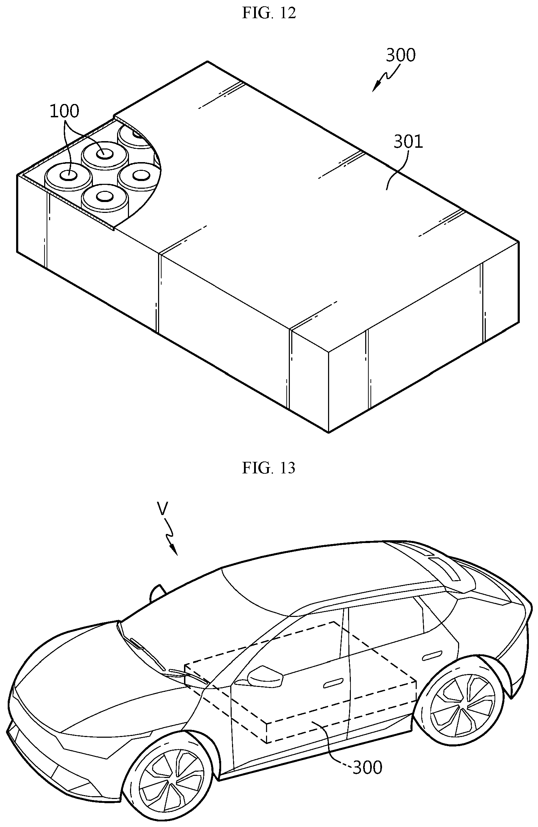

FIG. 12 is a view schematically showing the configuration of a battery pack 300 according to an embodiment of the present disclosure.

Referring to FIG. 12, a battery pack 300 according to an embodiment of the present disclosure includes an assembly where batteries 100 are electrically connected and a pack housing 302 accommodating the same. The battery 100 may be any one of the batteries 100 according to the above-described embodiments (modified examples). In the drawings, for convenience of illustration, components such as bus bars for electrical connection of the batteries 100, cooling units, external terminals, and the like are omitted. The structure of a plurality of batteries 100 for manufacturing the battery pack 300 has been exemplarily described above.

FIG. 13 is a view for describing a vehicle V including the battery pack 300 of FIG. 12.

Referring to FIG. 13, the vehicle V according to an embodiment of the present disclosure may include the battery pack 300 according to an embodiment of the present disclosure. The vehicle V may operate by receiving power from the battery pack 300 according to an embodiment of the present disclosure. The vehicle V may be, for example, an electric vehicle, a hybrid vehicle, or a plug-in hybrid vehicle. The vehicle V include a four-wheeled vehicle and a two-wheeled vehicle.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. An electrode assembly in which a positive electrode, a negative electrode, and a separator interposed therebetween are wound,
wherein at least one of the positive electrode and the negative electrode comprises an uncoated portion at a long side end, and
a winding turn portion of the uncoated portion is provided at one end of the electrode assembly,
wherein the winding turn portion comprises a cutting portion and a bending portion comprising a plurality of uncoated portion layers configured to be bent by pressure.

2. The electrode assembly according to claim 1,
wherein the bending portion is positioned on the core side based on a radial direction, and
the cutting portion is positioned further outward than the bending portion based on the radial direction.

3. The electrode assembly according to claim 1,
wherein the bending portion is disposed at a position corresponding to the innermost part of a beading portion of a battery or further inward.

4. The electrode assembly according to claim 1,
wherein the plurality of uncoated portion layers are bent toward the core side of the electrode assembly and overlap each other to form a bending surface region.

5. The electrode assembly according to claim 4,
wherein the electrode assembly is divided into a first region surrounded by the bending portion and the bending surface region, and a second region excluding the first region.

6. The electrode assembly according to claim 1,
wherein the cutting portion comprises a cutting surface substantially perpendicular to an axial direction.

7. The electrode assembly according to claim 6,
wherein the cutting surface is configured to be cut through a notching process.

8. The electrode assembly according to claim 6,
wherein the cutting surface is an ultrasonic cutting surface.

9. The electrode assembly according to claim 1,
wherein the bending portion is disposed at a position corresponding to the innermost part of a crimping portion of the battery or further inward.

10. The electrode assembly according to claim 1,
wherein the bending portion is disposed at a position corresponding to a venting portion of the battery or further inward.

11. A battery comprising:
an electrode assembly according to claim 1;
a battery housing that comprises an opened end and a closed portion opposite thereto, accommodates the electrode assembly through the opened end, and is electrically connected to the electrode assembly;
a beading portion where an outer circumference of the battery housing is recessed inward;
a cap that seals the opened end of the battery housing;
a terminal electrically connected to the electrode assembly and having a surface exposed to the outside; and
a current collector plate electrically connected to either the battery housing or the terminal.

12. The battery according to claim 11,
wherein the bending portion is disposed further inward than the innermost part of the beading portion, and
the cutting portion is disposed further outward than the innermost part of the beading portion.

13. The battery according to claim 11,
wherein the plurality of uncoated portion layers overlap toward the core side of the electrode assembly to form a bending surface region.

14. The battery according to claim 13,
wherein the electrode assembly is divided into a first region surrounded by the bending portion and the bending surface region, and a second region excluding the first region, and
when a thermal event occurs within the battery, the first region is configured to be discharged to the outside of the battery.

15. The battery according to claim 11, further comprising:
a crimping portion formed below the beading portion and configured to surround a part of the outer circumferential surface of the cap,
wherein the bending portion is disposed at a position corresponding to the innermost part of the crimping portion or further inward, and
the cutting portion is disposed further outward than the innermost part of the crimping portion.

16. The battery according to claim 11,
wherein the cap has a venting portion configured to be ruptured when the internal pressure of the battery housing increases above a certain level,
wherein the bending portion is disposed at a position corresponding to the venting portion or further inward, and
the cutting portion is disposed further outward than the venting portion.

17. A battery pack comprising a battery according to any one of claims 11 to 16.

18. A vehicle comprising a battery pack according to claim 17.
